# EUROPÄISCHE PATENTSCHRIFT

(11) **EP 2 554 971 B1**
(45) Veröffentlichungstag und Bekanntmachung des Hinweises auf die Patenterteilung: **30.08.2017**
(21) Anmeldenummer: 12174758.8
(22) Anmeldetag: 03.07.2012
(51) Int. Cl.: G01N 1/40

(54) **Verfahren und eine Vorrichtung zum automatischen Spülen von Filtern, insbesondere zum Spülen von Glasfaserfiltern bei Rauchmaschinen**
Method and device for automatic coiling of filters, in particular for coiling glass fibre filters for smoke machines
Procédé et dispositif de rinçage automatique de filtres, notamment le rinçage de filtres en fibre de verre de machines à fumer

(30) Priorität: 03.08.2011 DE 102011109319
(43) Veröffentlichungstag der Anmeldung: 06.02.2013
(73) Patentinhaber: British American Tobacco (Germany) GmbH, 20354 Hamburg (DE)
(72) Erfinder: Blumenstock, Martin, 95444 Bayreuth (DE); Trinkies, Wolfgang, 95497 Goldkronach (DE); Nast, Robert, 95444 Bayreuth (DE); Pagh, Rasmus, 95444 Bayreuth (DE); Ernst, Ute, 95336 Mainleus (DE); Burghart, Heinrich Harald, 22559 Hamburg (DE); Burghart, Kurt, 22880 Wedel (DE)
(74) Vertreter: Schwabe - Sandmair - Marx

(56) Entgegenhaltungen:
- GB-A- 2 423 461
- GB-A- 2 447 744
- US-A- 4 362 047
- US-A- 4 444 661

## Beschreibung

Die Erfindung betrifft ein Verfahren und eine Vorrichtung zum automatischen Spülen von Filtern, insbesondere zum Spülen von Glasfaserfiltern, im Weiteren Cambridge-Filter genannt, bei Rauchmaschinen.

Rauchmaschinen werden in Laboren zur Bestimmung der Inhaltsstoffe von Zigarettenrauch verwendet. Dabei werden Zigaretten auf einer Maschine entzündet und automatisiert in bestimmten Abständen Züge bestimmten Volumens genommen und dieser Rauch durch einen Filter gezogen, auf dem sich Partikel des Zigarettenrauchs sammeln, dem Cambridge-Filter. Zur Analyse der Partikel müssen diese wieder vom Cambridge-Filter gelöst werden. Entsprechend der einschlägigen Normen wird der Cambridge-Filter dann in einen Erlenmeyerkolben mit einer definierten Menge eines Lösungsmittels verbracht und die auf dem Cambridge-Filter gesammelten Partikel in vorgegebener Zeit ausgewaschen und so für die weitere Analyse und Quantifizierung vorbereitet.

Aufgabe der vorliegenden Erfindung ist es, die letzt genannten Schritte des Auswaschens zu automatisieren und mit möglichst geringem manuellen Aufwand und in möglichst kurzer Zeit zum gleichen Ergebnis zu gelangen.

Diese Aufgabe wird durch eine Vorrichtung nach dem Anspruch 1 und ein Verfahren nach dem Anspruch 9 gelöst. Ausführungsformen werden in den Unteransprüchen definiert.

Erfindungsgemäß weist die Vorrichtung zum labortechnischen Entfernen von gefilterten Substanzen aus Verbrennungsprozessen aus einem Filter, eine Halterung für den Filter und eine Spüleinrichtung zum Ausspülen des Filters in seiner Halterung mittels einer Flüssigkeit auf. Die Vorrichtung ist einer Rauchartikel- bzw. Zigarettenrauchmaschine zugeordnet. Die Halterung umfasst zumindest eine Lösungsmittelleitung. Die Spüleinrichtung kann in der Halterung integriert sein oder separat ausgebildet sein.
Der Filter kann ein Partikelfilter einer Rauchmaschine, insbesondere einer Rauchartikel- bzw. Zigarettenrauchmaschine, sein. Die Flüssigkeit kann ein Lösungsmittel, insbesondere Isopropanol, sein.
Die Halterung kann eine Halterung für den Filter, insbesondere ein Filterhalter in einer Rauchmaschine, insbesondere einer Rauchartikel- bzw. Zigarettenrauchmaschine, sein. In einer Ausführungsform kann die Halterung ein erstes Filterhalterteil und ein zweites Filterhalterteil umfassen. Alternativ kann die Halterung einteilig ausgebildet sein. Die Halterung kann eine Filteraufnahme und einen der Filteraufnahme zugeordneten Strömungsbereich aufweisen. Die Filteraufnahme kann dabei als Ausnehmung im ersten und/oder zweiten Filterhalterteil ausgebildet sein. Die Filteraufnahme kann zumindest im Wesentlichen die Form eines Filters aufweisen. Auf diese Weise kann der Filter zumindest bereichsweise formschlüssig auf der Filteraufnahme aufliegen. Der Strömungsbereich kann als kegelförmige Ausnehmung im ersten und/oder zweiten Filterhalterteil ausgebildet sein.
Die Halterung kann eine zentrale Bohrung aufweisen, insbesondere eine zentrale Bohrung mit einem aufgeweiteten Abschnitt zur Aufnahme einer Strömungsvorrichtung, insbesondere einer Pumpe. Die Halterung kann zumindest eine oder mehrere, insbesondere untereinander verbundene Lösungsmittelleitungen umfassen, welche insbesondere mit der zentralen Bohrung und/oder der Filteraufnahme und/oder dem Strömungsbereich strömungstechnisch in Verbindung sein kann bzw. können. Die Lösungsmittelleitungen können als Bohrungen im ersten und/oder zweiten Filterhalterteil ausgebildet sein.

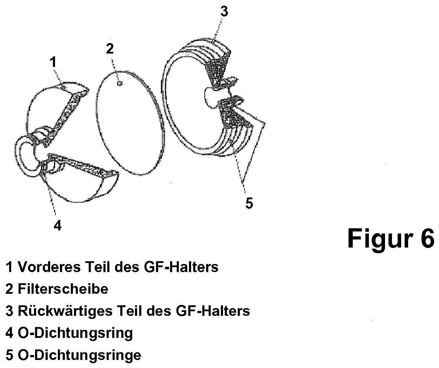

Nach einem erfindungsgemäßen Verfahren zum labortechnischen Entfernen von gefilterten Substanzen aus Verbrennungsprozessen aus einem gehalterten Filter einer Rauchartikel- bzw. Zigarettenrauchmaschine zur Analyse des Filtrats wird der Filter in einer Vorrichtung mit einer Halterung für den Filter und mit einer Spüleinrichtung zum Ausspülen des Filters in seiner Halterung von einer Flüssigkeit ausgespült. Insbesondere kann als Spülflüssigkeit ein Lösungsmittel verwendet werden.
Bei dem Verfahren können die Substanzen aus einem Partikelfilter einer Rauchmaschine entfernt werden.
In einer Ausführungsform des Verfahrens kann der Filter in einem ersten Spülschritt mit einer ersten Flüssigkeitsmenge ausgespült werden und in einem zweiten Spülschritt mit einer zweiten Flüssigkeitsmenge ausgespült werden. Insbesondere kann der Filter zwischen dem ersten Spülschritt und dem zweiten Spülschritt aus der Vorrichtung entfernt werden.
In besonderer Ausführungsform kann die Erfindung ferner auch so definiert werden, dass die Halterung des Filters, insbesondere des Cambridge-Filters so verändert wird, dass das Spülen mit dem Lösungsmittel direkt im Halter stattfinden kann.
Ein konventioneller Halter für einen Cambridge-Filter ist der Figur 6 aus der relevanten Norm DIN ISO 3308 zu entnehmen.

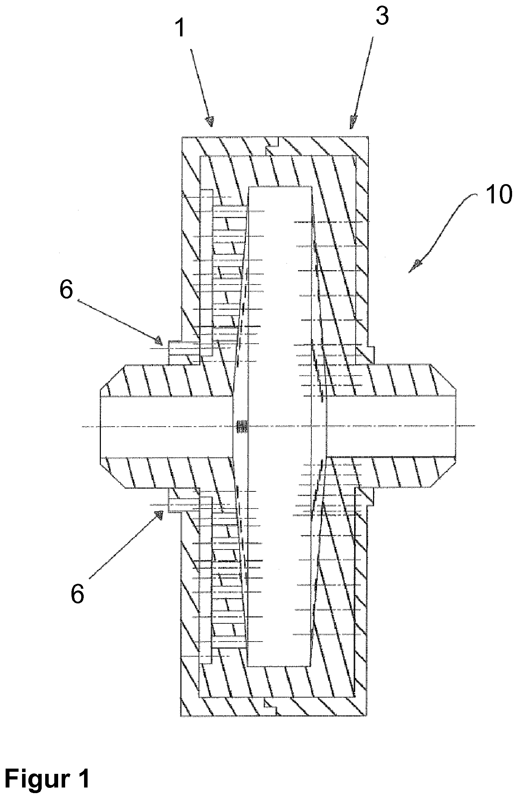

Die Dokumente GB2423461, US4362047 und US4444661 beschreiben Rauchartikel- bzw. Zigarettenrauchmachinen. Die Analyse von gefilterten Substanzen aus Verbrennungsprozessen findet manuell statt. Im Folgenden werden Ausführungsformen der Erfindung unter Bezugnahme auf die beiliegenden Zeichnungen näher erläutert, wobei die Figuren 1 bis 5 jeweils unterschiedlich gestaltete Filterhalter-Ausführungsformen zeigen.
Nach einer ersten Variante gemäß der Querschnittsdarstellung der Figur 1 können auf einem oder beiden Teilen 1, 3 des Filterhalters 10 zusätzliche Bohrungen 6 angebracht werden, durch die das Lösungsmittel eingebracht werden kann, wobei zuvor vorhandene Luft entweicht und dann durch Hin- und Her- Pumpen des Lösungsmittels der Filter definiert durchströmt wird. Hierbei ist die Pumpe an den Filterhalter angeschlossen.

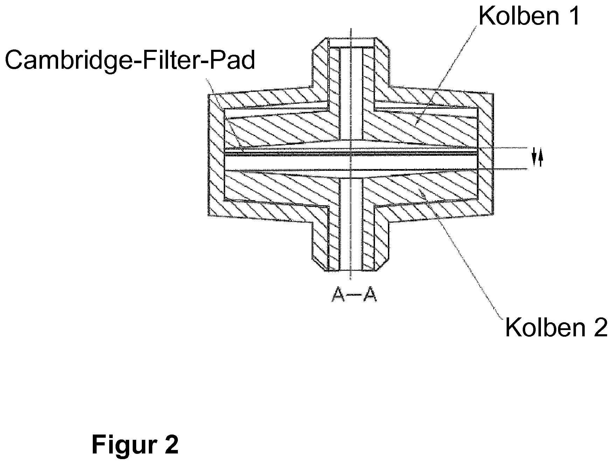

Eine zweite Variante gemäß der schematischen Querschnittsdarstellung der Figur 2 unterscheidet sich von der in Figur 1 gezeigten dadurch, dass das Lösungsmittel durch zwei Kolben bewegt wird, die Teil des Filterhalters sind. Die Zuführung des Lösungsmittels erfolgt hierbei insbesondere über die zentrale Bohrung. Alternativ kann das Lösungsmittel grundsätzlich auch durch eine, insbesondere auch zusätzliche, Drehbewegung des Filterhalters bewegt werden.

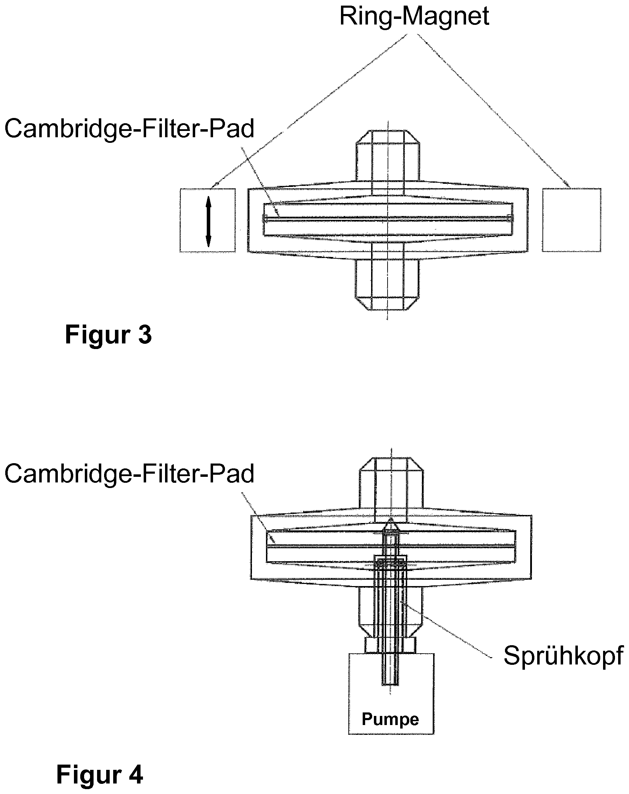

Eine dritte Variante gemäß der Querschnittsdarstellung der Figur 3 zeichnet sich dadurch aus, dass der Cambridge-Filter in einer magnetisierbaren Halterung gehalten wird und nach der Zuführung des Lösungsmittels in den Hohlraum von außen durch einen (Ring-)Magneten das "stehende" Lösungsmittel hin und her bewegt wird. Das Beispiel ist hier schematisch dargestellt.

In einer vierten Variante gemäß der schematischen Querschnittsdarstellung der Figur 4 wird der Cambridge-Filter durch einen Sprühkopf durchstoßen, der auf beiden Seiten des Cambridge-Filters Öffnungen aufweist und durch eine Pumpe somit auf beiden Seiten Lösungsmittel einbringen und auf der jeweils anderen Seite das Lösungsmittel wieder aufnehmen kann.

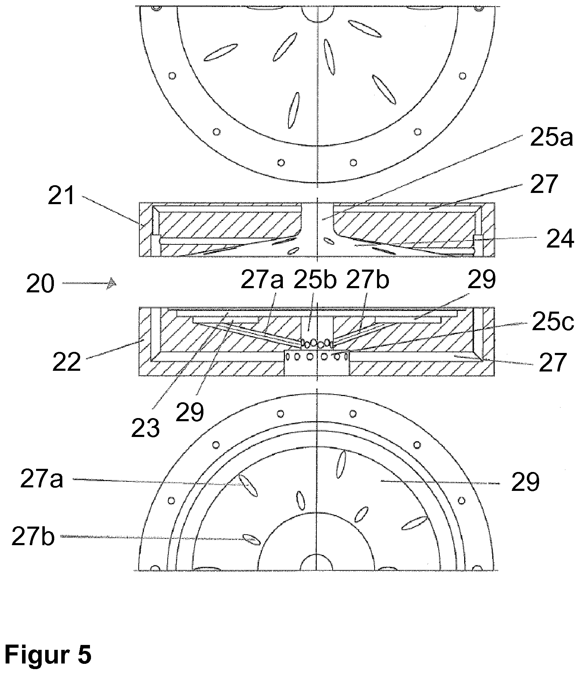

Figur 5 zeigt eine fünfte Variante in einer Querschnittsdarstellung sowie in einer Teildraufsicht. Die Halterung, hier Filterhalter 20, weist ein erstes Filterhalterteil 21 und ein zweites Filterhalterteil 22 auf. Im zusammengesetzten Zustand kann das erste Filterhalterteil 21 formschlüssig mit dem zweiten Filterhalterteil 22 in Verbindung sein. Insbesondere kann zwischen dem ersten Filterhalterteil 21 und dem zweiten Filterhalterteil 22 eine hier nicht gezeigte Dichtung, insbesondere ein Dichtring, angeordnet sein.

Am zweiten Filterhalterteil 22 ist eine Filteraufnahme 23 vorgesehen, in welcher ein Cambridge-Filter angeordnet werden kann. Die Filteraufnahme 23 kann so ausgebildet sein, dass die Form der Filteraufnahme 23 der Form des Cambridge-Filters entspricht. Der Filteraufnahme 23 ist ein Strömungsbereich 24 zugeordnet. Der Strömungsbereich 24 kann, wie dargestellt, als kegelförmige Ausnehmung im ersten Filterhalterteil 21 ausgebildet sein.

Der Filterhalter 20 weist eine zentrale Bohrung 25a, 25b auf, welche sich sowohl durch das erste Filterhalterteil 21 als auch durch das zweite Filterhalterteil 22 erstreckt. Durch die zentrale Bohrung 25a, 25b kann sowohl Rauch als auch Lösungsmittel geleitet werden. Die zentrale Bohrung 25a, 25b kann zumindest bereichsweise im ersten Filterhalterteil 21 den gleichen Durchmesser aufweisen wie im zweiten Filterhalterteil 22. Insbesondere weist die zentrale Bohrung 25b des zweiten Filterhalterteils 22 einen aufgeweiteten Abschnitt 25c auf, in welchem eine Strömungsvorrichtung, insbesondere eine Pumpe zum Fördern eines Lösungsmittels, angeordnet sein kann. Die zentrale Bohrung 25a, 25b sowie der Strömungsbereich 24 sind strömungstechnisch mit Lösungsmittelleitungen 27 verbunden.

Insbesondere können die Lösungsmittelleitungen 27 als Bohrungen im ersten Filterhalterteil 21 und/oder im zweiten Filterhalterteil 22 ausgebildet sein. Die Lösungsmittelleitungen 27 können zumindest bereichsweise parallel zur zentralen Bohrung 25a, 25b und/oder zumindest bereichsweise senkrecht zur zentralen Bohrung 25a, 25b angeordnet sein. Insbesondere können die Lösungsmittelleitungen 27 zumindest bereichsweise quer zur zentralen Bohrung 25a, 25b angeordnet sein.

In der Figur 5 sind ein erster Lösungsmittelleitungsabschnitt 27a und ein zweiter Lösungsmittelleitungsabschnitt 27b in einer Querschnittsdarstellung durch das zweite Filterhalterteil 22 gezeigt. Der erste Lösungsmittelleitungsabschnitt 27a und der zweite Lösungsmittelleitungsabschnitt 27b sind in Bezug auf die zentrale Bohrung 25b gegenüberliegend in unterschiedlicher Winkelstellung angeordnet. Der erste Lösungsmittelleitungsabschnitt 27a und der zweite Lösungsmittelleitungsabschnitt 27b erstrecken sich von der zentralen Bohrung 25b bis zu einem Mündungsbereich 29.

Der Mündungsbereich 29 steht mit der Filteraufnahme 23 strömungstechnisch in Verbindung. Der Mündungsbereich 29 kann, wie dargestellt, als ringförmige Ausnehmung ausgebildet sein, welche insbesondere unmittelbar unterhalb der Filteraufnahme 23 angeordnet sein kann.

Wie aus der in der Figur 5 gezeigten Teildraufsicht hervorgeht, weist das zweite Filterhalterteil 22 eine Vielzahl von ersten Lösungsmittelleitungsabschnitten 27a und zweiten Lösungsmittelleitungsabschnitten 27b auf, welche in den Mündungsbereich 29 münden. Aufgrund der in Bezug auf die zentrale Bohrung 25b unterschiedlichen Winkelstellung der ersten Lösungsmittelleitungsabschnitte 27a und der zweiten Lösungsmittelleitungsabschnitte 27b sind deren Mündungsöffnungen als unterschiedlich große Ellipsen ausgebildet.

Im eingebauten Zustand des Filterhalters 20 in einer Rauchartikelrauchmaschine kann in einem Rauchmodus Rauch durch die zentrale Bohrung 25a, 25b in einer Richtung vom ersten Filterhalterteil 21 zum zweiten Filterhalterteil 22 gesaugt werden. Dabei können die Lösungsmittelleitungen 27 durch eine Schließvorrichtung, etwa ein Ventil geschlossen werden.

In einem Spülmodus der Rauchartikelrauchmaschine können die Lösungsmittelleitungen 27 geöffnet und mit einem Lösungsmittel gefüllt werden. Eine im aufgeweiteten Abschnitt 25c der zentralen Bohrung 25b angeordnete Pumpe kann das Lösungsmittel durch die Lösungsmittelleitungen 27 pumpen und so einen zwischen dem ersten Filterhalterteil 21 und dem zweiten Filterhalterteil 22 angeordneten Filter spülen.

Das Lösungsmittel kann im Spülmodus im Strömungsbereich 24 hin und her gepumpt werden. Insbesondere kann ein Volumen, welches durch die Filteraufnahme 23, den Strömungsbereich 24, die zentrale Bohrung 25a, 25b und die Lösungsmittelleitungen 27 gebildet ist, einem genormten Volumen entsprechen.

## Patentansprüche

1. Vorrichtung zum labortechnischen Entfernen von gefilterten Substanzen aus Verbrennungsprozessen aus einem Filter, mit einer Halterung (10; 20) für den Filter und mit einer Spüleinrichtung zum Ausspülen des Filters in seiner Halterung (10; 20) mittels einer Flüssigkeit, wobei die Vorrichtung einer Rauchartikel- bzw. Zigarettenrauchmaschine zugeordnet ist, **dadurch gekennzeichnet, dass** die Halterung (10; 20) zumindest eine Lösungsmittelleitung (27) umfasst.

2. Vorrichtung nach Anspruch 1, bei der der Filter ein Partikelfilter einer Rauchmaschine, insbesondere einer Rauchartikel- bzw. Zigarettenrauchmaschine, ist.

3. Vorrichtung nach Anspruch 1 oder 2, bei der die Halterung eine Halterung für den Filter in einer Rauchmaschine ist.

4. Vorrichtung nach einem der Ansprüche 1 bis 3, bei der die Flüssigkeit ein Lösungsmittel ist.

5. Vorrichtung nach einem der Ansprüche 1 bis 4, wobei die Halterung (20) ein erstes Filterhalterteil (21) und ein zweites Filterhalterteil (22) umfasst.

6. Vorrichtung nach einem der Ansprüche 1 bis 5, wobei die Halterung eine Filteraufnahme (23) und einen der Filteraufnahme (23) zugeordneten Strömungsbereich (24) aufweist.

7. Vorrichtung nach einem der Ansprüche 1 bis 6, wobei die Halterung eine zentrale Bohrung (25a, 25b) aufweist, insbesondere eine zentrale Bohrung mit einem aufgeweiteten Abschnitt (25c) zur Aufnahme einer Strömungsvorrichtung, insbesondere einer Pumpe.

8. Vorrichtung nach einem der Ansprüche 6 oder 7, wobei die zumindest eine Lösungsmittelleitung (27) mit der zentralen Bohrung (25a, 25b) und/oder der Filteraufnahme (23) und/oder dem Strömungsbereich (24) strömungstechnisch in Verbindung ist.

9. Verfahren zum labortechnischen Entfernen von gefilterten Substanzen aus Verbrennungsprozessen aus einem gehalterten Filter einer Rauchartikel- bzw. Zigarettenrauchmaschine zur Analyse des Filtrats, **dadurch gekennzeichnet, dass** der Filter in einer Vorrichtung mit einer Halterung (10; 20) für den Filter und mit einer Spüleinrichtung zum Ausspülen des Filters in seiner Halterung (10; 20) von einer Flüssigkeit ausgespült wird.

10. Verfahren nach Anspruch 9, bei dem die Substanzen aus einem Partikelfilter einer Rauchmaschine entfernt werden.

11. Verfahren nach Anspruch 9 oder 10, bei dem als Spülflüssigkeit ein Lösungsmittel verwendet wird.

12. Verfahren nach einem der Ansprüche 9 bis 11, bei dem der Filter in einem ersten Spülschritt mit einer ersten Flüssigkeitsmenge ausgespült wird und in einem zweiten Spülschritt mit einer zweiten Flüssigkeitsmenge ausgespült wird.

13. Verfahren nach Anspruch 12, bei dem der Filter zwischen dem ersten Spülschritt und dem zweiten Spülschritt aus der Vorrichtung entfernt wird.

## Claims

1. A device for removing filtered substances from combustion processes from a filter under laboratory conditions, comprising a mount (10; 20) for the filter and a rinsing means for rinsing out the filter in its mount (10; 20) by means of a liquid, wherein the device is assigned to a smoking product and/or cigarette smoking machine, **characterised in that** the mount (10; 20) comprises at least one solvent conduit (27).

2. The device according to Claim 1, wherein the filter is a particle filter of a smoking machine, in particular a smoking product and/or cigarette smoking machine.

3. The device according to Claim 1 or 2, wherein the mount is a mount for the filter in a smoking machine.

4. The device according to any one of Claims 1 to 3, wherein the liquid is a solvent.

5. The device according to any one of Claims 1 to 4, wherein the mount (20) comprises a first filter holder part (21) and a second filter holder part (22).

6. The device according to any one of Claims 1 to 5, wherein the mount comprises a filter receptacle (23) and a flow region (24) assigned to the filter receptacle (23).

7. The device according to any one of Claims 1 to 6, wherein the mount comprises a central bore (25a, 25b), in particular a central bore comprising a widened portion (25c) for receiving a flow device, in particular a pump.

8. The device according to Claim 6 or 7, wherein the at least one solvent conduit (27) is in flow communication with the central bore (25a, 25b) and/or the filter receptacle (23) and/or the flow region (24).

9. A method for removing filtered substances from combustion processes from a mounted filter of a smoking product and/or cigarette smoking machine under laboratory conditions in order to analyse the filtrate, **characterised in that** the filter is rinsed out with a liquid in a device comprising a mount (10; 20) for the filter and a rinsing means for rinsing out the filter in its mount (10; 20).

10. The method according to Claim 9, wherein the substances are removed from a particle filter of a smoking machine.

11. The device according to Claim 9 or 10, wherein a solvent is used as the rinsing liquid.

12. The method according to any one of Claims 9 to 11, wherein the filter is rinsed out with a first amount of liquid in a first rinsing step and is rinsed out with a second amount of liquid in a second rinsing step.

13. The method according to Claim 12, wherein the filter is removed from the device between the first rinsing step and the second rinsing step.

## Revendications

1. Dispositif permettant d'éliminer d'un filtre, en laboratoire, des substances filtrées issues de processus de combustion, lequel dispositif comprend un support (10 ; 20) pour filtre et un système de rinçage permettant de rincer le filtre dans son support (10 ; 20) au moyen d'un liquide, le dispositif étant associé à une machine à fumer pour articles à fumer et/ou à une machine à fumer les cigarettes, **caractérisé en ce que** le support (10 ; 20) comprend au moins un conduit de solvant (27).

2. Dispositif selon la revendication 1, dans lequel le filtre est un filtre à particules d'une machine à fumer, notamment d'une machine à fumer pour articles à fumer et/ou d'une machine à fumer les cigarettes.

3. Dispositif selon la revendication 1 ou 2, dans lequel le support est un support pour filtre appartenant à une machine à fumer.

4. Dispositif selon l'une des revendications 1 à 3, dans lequel le liquide est un solvant.

5. Dispositif selon l'une des revendications 1 à 4, dans lequel le support (20) comprend une première partie de porte-filtre (21) et une deuxième partie de porte-filtre (22).

6. Dispositif selon l'une des revendications 1 à 5, dans lequel le support présente un logement de filtre (23) et une zone d'écoulement (24) associée au logement de filtre (23).

7. Dispositif selon l'une des revendications 1 à 6, dans lequel le support présente un alésage central (25a, 25b), notamment un alésage central avec une section élargie (25c) en vue du logement d'un dispositif d'écoulement, notamment une pompe.

8. Dispositif selon l'une des revendications 6 et 7, dans lequel l'au moins un conduit de solvant (27) est en communication fluidique avec l'alésage central (25a, 25b) et/ou le logement de filtre (23) et/ou la zone d'écoulement (24).

9. Procédé permettant d'éliminer d'un filtre, en laboratoire, les substances filtrées issues de processus de combustion, ledit filtre étant supporté dans une machine à fumer pour articles à fumer et/ou une machine à fumer les cigarettes en vue de l'analyse du filtrat, **caractérisé en ce que** le filtre est rincé avec un liquide dans un dispositif comprenant un support (10 ; 20) pour filtre et un système de rinçage permettant de rincer le filtre dans son support (10 ; 20).

10. Procédé selon la revendication 9, dans lequel les substances sont éliminées d'un filtre à particules d'une machine à fumer.

11. Procédé selon la revendication 9 ou 10, dans lequel le liquide de rinçage utilisé est un solvant.

12. Procédé selon l'une des revendications 9 à 11, dans lequel le filtre est rincé, au cours d'une première étape de rinçage, avec une première quantité de liquide et, au cours d'une deuxième étape de rinçage, avec une deuxième quantité de liquide.

13. Procédé selon la revendication 12, dans lequel le filtre est retiré du dispositif entre la première étape de rinçage et la deuxième étape de rinçage.
